# NEUE EUROPÄISCHE PATENTSCHRIFT

(11) **EP 0 144 726 B2**
(45) Veröffentlichungstag und Bekanntmachung des Hinweises auf die Entscheidung über den Einspruch: **24.05.1995**
(45) Hinweis auf die Patenterteilung: 31.05.1989
(21) Anmeldenummer: 84113170.9
(22) Anmeldetag: 02.11.1984
(51) Int. Cl.: A01N 25/02, A01N 55/02, C08K 5/59

(54) **Antimikrobielle Mischungen**
Anti-microbial compositions
Compositions anti-microbiennes

(30) Priorität: 17.11.1983 CH 6184/83
(43) Veröffentlichungstag der Anmeldung: 19.06.1985
(73) Patentinhaber: Akzo Nobel N.V., 6824 BM Arnhem (NL)
(72) Erfinder: Roth, Willy, Dr., CH-4802 Strengelbach (CH)
(74) Vertreter: Pfeiffer, Ernst

(56) Entgegenhaltungen:
- US-A- 4 049 822
- US-E- 29 409
- The Merck Index, 9th. ed. 1138 "Benzyl Alcohol", 7015 "Phenethyl Alcohol", 7056 "2-Phenoxyethanol".
- The Handbook of Solvents, 1953, D.Van NOSTRAND COMPANY INC. New York, p. 1124, 589-590.

## Beschreibung

Die vorliegende Erfindung bezieht sich auf antimikrobielle Mischungen, bzw. auf für die antimikrobielle Ausrüstung von Kunststoffen geeignete Mischungen, wobei unter der Wirkungsbezeichnung "antimikrobiell" insbesondere auch eine fungistatische bzw. fungizide Wirkung zu verstehen ist.

Es ist bekannt, Kunstharzmaterialien gegen mikrobielle Einwirkungen dadurch zu schützen, dass man in diesen Materialien antimikrobielle Wirksubstanzen inkorporiert. Insbesondere ist es bekannt, in diese Kunstharzmaterialien Phenoxyarsine, beispielsweise das 10, 10'-Oxybisphenoxyarsin, als antimikrobielle Mittel zu inkorporieren. Dies wird im allgemeinen dadurch bewerkstelligt, dass man den bei der Herstellung dieser Kunstharzmaterialien, beispielsweise bei der Herstellung von Vinylharzen, wie Polyvinylchlorid, verwendeten Weichmacher mit einer Lösung des Phenoxyarsins versetzt. Für diesen Zweck wurden verschiedene Lösungsmittel für das Phenoxyarsin vorgeschlagen, beispielsweise Phenole und aliphatische Alkohole, wie Nonylphenol, sowie gewisse Phosphite und Phosphonate, wie das Tris(dipropylenglycyl)phosphit (U.S. Patentschrift Nr. 3.288.674). Diese Lösungsmittel weisen nun in verschiedener Hinsicht zum Teil erhebliche Nachteile auf, und zwar:
- geringes Lösungsvermögen bei Raumtemperatur,
- hohe Viskosität und damit verbundene Schwierigkeiten bei der Verarbeitung,
- Geruchsbelästigungen,
- niedrige Siedepunkte,
- nicht zufriedenstellende Mischbarkeit mit den in der Kunststoffindustrie üblicherweise verwendeten Weichmachern,
- ungünstige toxikologische Eigenschaften.

Der vorliegenden Erfindung lag nun die Aufgabe zugrunde, antimikrobielle Mischungen, bzw. für die antimikrobielle Ausrüstung von Kunststoffen geeignete Mischungen, welche ein Phenoxyarsin als antimikrobielles Mittel und ein Lösungsmittel für das verwendete Phenoxyarsin enthalten, zu schaffen, welche die durch die bisher verwendeten Lösungsmittel bedingten Nachteile nicht aufweisen.

Diese Aufgabe wurde erfindungsgemäss durch die Verwendung eines Lösungsmittels der Formel: 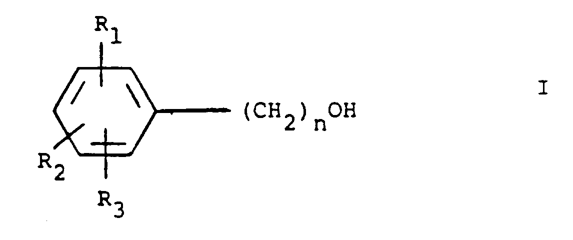
gelöst,

worin R₁, R₂ und R₃ Wasserstoff oder niederes Alkyl (C₁-C₇) und n 1 oder 2 bedeuten.

Ein Aspekt der vorliegenden Erfindung betrifft somit eine antimikrobielle Mischung, bzw. eine für die antimikrobielle Ausrüstung von Kunststoffen geeignete Mischung, welche ein Phenoxyarsin als antimikrobielles Mittel und ein Lösungsmittel enthält, wobei diese Mischung dadurch gekennzeichnet ist, dass das Lösungsmittel eine Verbindung der obigen Formel I ist.

Bevorzugte Vertreter von Verbindungen der obigen Formel I sind der Benzyalkohol und das 2-Phenyläthanol, wobei der Benzylalkohol besonders bevorzugt ist.

Weitere Vertreter von Verbindungen der Formel I sind solche, worin R₁, R₂ und R₃ je eine Butylgruppe bedeuten, d.h. Tributyl-substituierte Verbindungen der Formel I.

Als Phenoxyarsine kommen alle üblicherweise für die antimikrobielle Ausrüstung von Kunststoff verwendeten Phenoxyarsine in Betracht, wie sie beispielsweise in den U.S. Patentschriften Nr. 3.689.449 und Nr. 4.049.822 genannt sind. Ein besonders bevorzugtes Phenoxyarsin ist das 10, 10'-Oxybisphenoxyarsin.

Eine derartige Lösung, welche ein Phenoxyarsin, insbesondere das genannte 10, 10'-Oxybisphenoxyarsin, und ein Lösungsmittel der Formel I enthält, weist im allgemeinen einen Gehalt von etwa 10 bis etwa 50 Gew.-% Phenoxyarsin, beispielsweise einen Gehalt von 20 - 30 Gew.-% Phenoxyarsin, auf.

Ein weiterer Aspekt der vorliegenden Erfindung betrifft eine Zusammensetzung, welche neben dem Phenoxyarsin und dem Lösungsmittel zusätzlich noch mindestens einen Weichmacher enthäit. Mit einer derartigen Zusammensetzung wird üblicherweise das Phenoxyarsin und der Weichmacher in das Kunstharzmaterial inkorporiert. Eine derartige Zusammensetzung erhält man beispielsweise durch Vermischen einer 20 %-igen Stammlösung (20 %-ige Lösung des Phenoxyarsins in einem Lösungsmittel der Formel I) mit einem Weichmacher, wobei man ein Produkt erhält, welches etwa 1 - 2 Gew.-% Phenoxyarsin, bezogen auf die Gesamtmasse Weichmacher, Lösungsmittel und Phenoxyarsin enthält Derartige Zusammensetzungen werden in der Kunststoff verarbeitenden Industrie zur antimikrobiellen Ausrüstung von Folien, Fussbodenbelägen, Wandverkleidungen, Duschvorhängen, Badematten, Türgriffen, Handläufen von Treppen, Bandagen von Röhren, etc. verwendet. Solche Zusammensetzungen lassen sich auf herkömmlichen Maschinen leicht in die betreffenden Kunststoffe einarbeiten, wobei beispielsweise bei Polyvinylchloriderzeugnissen auch die üblichen Verarbeitungstemperaturen bis zu etwa 180° C vertragen werden.

Als Weichmacher kommen insbesondere die folgenden Substanzen in Betracht:
- Ester mehrbasischer Säuren (wie Phthalsäure, Adipinsäure, Trimellithsäure,Sebacinsäure) mit einwertigen Alkoholen (wie Aethylhexylalkanol, Isodecylalkohol, Isotridecylalkohol) mit Molekulargewichten von etwa 250 bis etwa 500,
- Polyester von Glykolen (wie 1,2-Propylenglykol, Neopentylglykol) mit zweibasischen Säuren (wie Adipinsäure, Sebacinsäure) mit Molekulargewichten von etwa 600 bis etwa 1200,
- Epoxydierte Pflanzensamenöle (wie Soyaepoxid, Ricinusölepoxid),
- Phosphorsäureester (wie Trikresylphosphat, Tri-2-äthylhexylphosphat).

Als Kunstharze kommen insbesondere Vinylharze in Frage, und zwar Homopolymere von Vinylchlorid, hergestellt durch Emulsions-, Suspensions- oder Masse-Polymerisation und Copolymere von Vinylchlorid mit Vinylacetat, Maleinsäure, Vinylidenchlorid, Acrylnitril usw., hergestellt durch Emulsions- oder Suspensions-Polymerisation, sowie durch Aufpfropfung.

Ein bevorzugtes Kunstharzmaterial ist Polyvinylchlorid.

Ein weiterer Aspekt der vorliegenden Erfindung betrifft somit ein Kunstharzmaterial, insbesondere ein Polyvinylchloridmaterial, welches unter Verwendung einer der oben angegebenen Mischungen hergestellt wurde.

Die vorliegende Erfindung betrifft ferner ein Verfahren zur Herstellung einer antimikrobiellen Mischung, bzw. einer für die antimikrobielle Ausrüstung von Kunststoffen geeigneten Mischung, welches darin besteht, dass man ein Phenoxyarsin, insbesondere das 10, 10'-Oxybisphenoxyarsin in einem Lösungsmittel der obigen Formel I löst und diese Lösung gegebenenfalls in einen Weichmacher einarbeitet.

Ferner betrifft die vorliegende Erfindung ein Verfahren zur Herstellung eines Kunstharzmaterials, insbesondere eines Polyvinylchloridmaterials, welches dadurch gekennzeichnet ist, dass man ein Phenoxyarsin, insbesondere das 10, 10'-Oxybisphenoxyarsin, in einem Lösungsmittel der obigen Formel I löst, die erhaltene Lösung in einen Weichmacher einarbeitet und die erhaltene Weichmachermischung bei der Herstellung des Kunstharzmaterials verwendet. Solche Weichmachermischungen können zusätzlich noch Antioxidantien, wie beispielsweise sterisch gehinderte Phenole (wie 2,6-Ditert.butyl-p-kresol; Aminverbindungen, wie beispielsweise N, N'-Dicyclohexyl-p-phenylendiamin; Schwefel (II)-Verbindungen, wie beispielsweise Thiodipropionsäuredilaurylester) enthalten. Die unter Verwendung solcher Weichmachermischungen hergestellten Kunstharzmaterialien können ferner noch Gleitmittel, wie beispielsweise Metallseifen (z. B. Calciumstearat, Zinkstearat) oder Wachse (z. B. Carnaubawachs) enthalten Solche Weichmachermischungen können zu etwa 1,5 % (bei einem Phenoxyarsingehalt von 2 %) oder 3 % (bei einem Phenoxyarsingehalt von 1 %), bezogen auf das Vinylsystem, in Polyvinylchloridmischungen eingearbeitet werden.

### Beispiel 1

In der folgenden Tabelle sind verschiedene Konzentrate von 10, 10'-Oxybisphenoxyarsin (OBPA) mit verschiedenen Lösungsmitteln zusammengestellt, wobei jeweils die zur Auflösung des OBPA erforderliche minimale Temperatur angegeben ist (RT = Raumtemperatur).

**Tabelle 1**

| | Konzentrate [Gew.-%] | |
|---|---|---|
| Komponenten | A | B |
| OBPA | 20 | 20 |
| Benzylalkohol | 80 | |
| 2-Phenyläthanol | | 80 |
| Auflösetemperatur [°C] | RT | 50 |

Die obigen Konzentrate A und B sind frostsicher und können in geeigneten Behältern praktisch unbegrenzt gelagert werden.

### Beispiel 2

Die in Tabelle 1 angeführten Konzentrate A und B werden bei Raumtemperatur mit verschiedenen Weichmachern gemischt, wobei man Handelsprodukte mit einem Gehalt von 1 bzw. 2 Gew.-% OBPA erhalt. In der Tabelle 2 sind so erhaltene Mischungen zusammengestellt.

**Tabelle 2**

| | | Produkte [Gew.-%] | | | | | | | |
|---|---|---|---|---|---|---|---|---|---|
| Komponenten | | A | B | D | E | G | H | K | L |
| Konzentrat | A | 5 | | 10 | | 5 | | 10 | |
| | B | | 5 | | 10 | | 5 | | 10 |
| Diisodecylphthalat | | 95 | 95 | 90 | 90 | | | | |
| Soyaöl, epoxidiert | | | | | | 95 | 95 | 90 | 90 |
| OBPA-Gehalt | | 1 | 1 | 2 | 2 | 1 | 1 | 2 | 2 |

Auch diese Produkte sind froststabil und können in geeigneten Behältnissen praktisch unbegrenzt gelagert werden.

### Beispiel 3

Die Produkte A-L von Tabelle 2 können in Polyvinylchlorid-Mischungen eingesetzt werden, und zwar insbesondere zu 1,5 % (bei einem OBPA-Gehalt von 20 %) oder 3 % (bei einem OBPA-Gehalt von 1 %), bezogen auf das Vinylsystem.

Das Vinylsystem kann beispielsweise folgende Zusammensetzung aufweisen:

| | Gew.-% |
|---|---|
| Suspensions PVC (K = 70 - 72) | 57,55 |
| Weichmachermischung gemäss Erfindung (2 % OBPA) | 1,50 |
| Andere Weichmacher | 27,90 |
| Antioxydans | 0,05 |
| Burgess Clay | 8,60 |
| Dibasisches Bleiphthalat | 3,50 |
| Dibasisches Bleistearat | 0,60 |
| Gleitmittel | 0,30 |
| | 100,0 |

Unter "Weichmachermischung" ist hierbei eines der Produkte A - L von Tabelle 2 zu verstehen. Auf diese Weise erhält die Vinylmischung einen Gehalt von 0,03 % oder 300 ppm OBPA, was für eine antimikrobielle Schutzwirkung ausreicht.

## Patentansprüche

1. Eine antimikrobielle, bzw. für die antimikrobielle Ausrüstung von Kunststoffen geeignete Mischung, enthaltend ein Phenoxyarsin als antimikrobielles Mittel und ein Lösungsmittel, dadurch gekennzeichnet, dass das Lösungsmittel eine Verbindung der Formel: 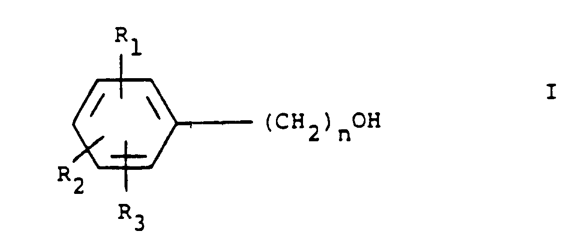 worin R₁, R₂ und R₃ Wasserstoff oder niederes Alkyl (C₁-C₇) und n 1 oder 2 bedeuten, ist.

2. Mischung nach Anspruch 1, dadurch gekennzeichnet, dass das Lösungsmittel Benzylalkohol ist.

3. Mischung nach Anspruch 1, dadurch gekennzeichnet, dass das Lösungsmittel 2-Phenyläthanol ist.

4. Mischung nach einem der Ansprüche 1 bis 3, dadurch gekennzeichnet, dass das Phenoxyarsin 10, 10'-Oxybisphenoxyarsin ist.

5. Mischung nach einem der Ansprüche 1 bis 4, dadurch gekennzeichnet, dass sie mindestens etwa 10 %, beispielsweise etwa 20 - 30 %, Phenoxyarsin enthält.

6. Mischung nach einem der Ansprüche 1 bis 5, dadurch gekennzeichnet, dass sie zusätzlich einen Weichmacher enthält.

7. Kunststoffmaterial, hergestellt unter Verwendung einer Mischung nach einem der Ansprüche 1 bis 6.

8. Kunststoffmaterial nach Anspruch 7, dadurch gekennzeichnet, dass das Kunstharz ein Polyvinylchlorid ist.

9. Verfahren zur Herstellung einer Mischung nach einem der Ansprüche 1 bis 6, dadurch gekennzeichnet, dass man ein Phenoxyarsin in einem Lösungsmittel der Formel I in Anspruch 1 löst und diese Lösung gegebenenfalls in einen Weichmacher einarbeitet.

10. Verfahren zur Herstellung eines Kunststoffmaterials nach Anspruch 7 oder 8, dadurch gekennzeichnet, dass man ein Phenoxyarsin in einem Lösungsmittel der Formel I in Anspruch 1 löst, die erhaltene Lösung in einen Weichmacher einarbeitet und letzteren bei der Herstellung des Kunststoffmaterials verwendet.

11. Verwendung einer Verbindung der Formel I in Anspruch 1 als Lösungsmittel für Phenoxyarsine, insbesondere für 10, 10'-Oxybisphenoxyarsin.

## Claims

1. An antimicrobial mixture or a mixture imparting antimicrobial properties to synthetic materials, containing a phenoxyarsine as the antimicrobial agent and a solvent, characterized in that the solvent is a compound of the formula: 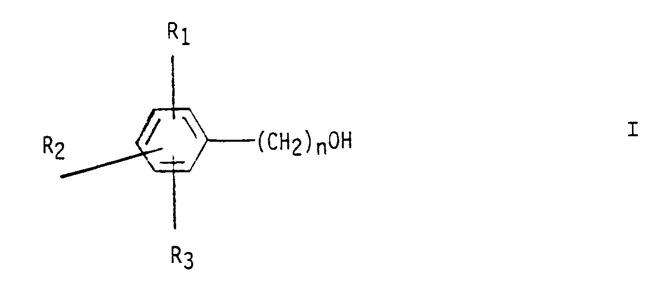 wherein R₁, R₂ and R₃ represent hydrogen or lower alkyl (C₁-C₇), and n signifies 1 or 2.

2. A mixture according to claim 1, characterized in that the solvent is benzyl alcohol.

3. A mixture according to claim 1, characterized in that the solvent is 2-phenylethanol.

4. A mixture according to any one of claims 1-3, characterized in that the phenoxyarsine is 10,10'-oxybisphenoxyarsine.

5. A mixture according to any one of claims 1-4, characterized in that it contains at least about 10%, for example about 20-30%, of phenoxyarsine.

6. A mixture according to any one of claims 1-5, characterized in that it also contains a plasticizer.

7. A synthetic material, manufactured using a mixture according to any one of claims 1-6.

8. A synthetic material according to claim 7, characterized in that the synthetic resin is a polyvinyl chloride.

9. A process for the manufacture of a mixture according to any one of claims 1-6, characterized in that a phenoxyarsine is dissolved in a solvent of formula I given in claim 1 and, optionally, the resulting solution is incorporated into a plasticizer.

10. A process for the manufacture of a synthetic material according to claim 7 or 8, characterized in that a phenoxyarsine is dissolved in a solvent of formule (I) given in claim 1, the resulting solution is incorporated into a plasticizer, and the resulting plasticizer mixture is used in the manufacture of the synthetic material.

11. The use of a compound of formula (I) given in claim 1 as a solvent for phenoxyarsines, more particularly for 10,10'-oxybisphenoxyarsine.

## Revendications

1. Composition antimicrobienne, ou convenant pour conférer à des matières plastiques des propriétés antimicrobiennes, cette composition contenant, comme agents antimicrobiens, une phénoxyarsine et un solvant, composition caractérisée en ce que le solvant est un composé de formule 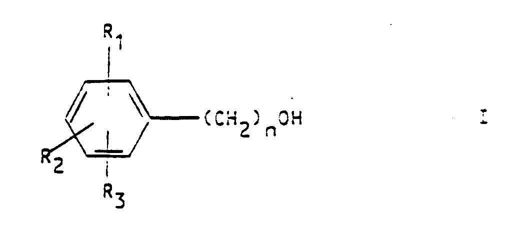 dans laquelle
les symboles R₁, R₂ et R₃ représentent chacun un atome d'hydrogène ou un groupe alkyle inférieur (en C₁ à C₇), et n vaut 1 ou 2.

2. Composition selon la revendication 1, caractérisée en ce que le solvant est de l'alcool benzylique.

3. Composition selon la revendication 1, caractérisée en ce que le solvant est le 2-phényléthanol.

4. Composition selon l'une des revendications 1 à 3, caractérisée en ce que la phénoxyarsine est la 10,10'-oxybisphénoxyarsine.

5. Composition selon l'une des revendications 1 à 4 , caractérisée en ce qu'elle contient au moins environ 10 %, par exemple environ 20 à 30 %, de phénoxyarsine.

6. Composition selon l'une des revendications 1 à 5 , caractérisée en ce qu'elle contient en outre un plastifiant.

7. Matière plastique, préparée avec utilisation d'une composition selon l'une des revendications 1 à 6.

8. Matière plastique selon la revendication 7, caractérisé en ce que la résine synthétique est un poly(chlorure de vinyle).

9. Procédé pour préparer une composition selon l'une des revendications 1 à 6, caractérisé en ce qu'on dissout une phénoxyarsine dans un solvant de formule I selon la revendication 1 et l'on incorpore cette solution éventuellement à un plastifiant.

10. Procédé pour préparer une matière plastique ou synthétique selon la revendication 7 ou 8, caractérisé en ce qu'on dissout une phénoxyarsine dans un solvant de formule I selon la revendication 1, on incorpore la solution ainsi obtenue à un plastifiant et l'on utilise ce dernier lors de la préparation de la matière plastique.

11. Utilisation d'un composé de formule I selon la revendication 1 comme solvant pour des phénoxyarsines, en particulier pour la 10,10'-oxybisphénoxyarsine.
